# EUROPÄISCHE PATENTANMELDUNG

(11) **EP 1 475 411 A1**
(43) Veröffentlichungstag der Anmeldung: **10.11.2004**
(21) Anmeldenummer: 03010122.4
(22) Anmeldetag: 05.05.2003
(51) Int. Cl.: C08L 63/00, C08G 59/50

(54) **Mannichbasen und Herstellungsverfahren von Mannichbasen**

(71) Anmelder: Sika Technology AG, 6340 Baar (CH)
(72) Erfinder: Gerber, Ulrich, 8142 Uitikon-Waldegg (CH); Wigger, Thomas, 8904 Aesch bei Birmensdorf (CH)
(74) Vertreter: Isler, Jörg

(57) **Zusammenfassung**

Es sind neuartige Mannichbasen beschrieben zu deren Herstellung mindestens eine phenolische Verbindung der Formel (I) sowie Formaldehyd und mindestens ein Polyamin verwendet werden.

Weiterhin wird ein zweistufiges Verfahren zur Herstellung von Mannichbasen offenbart, welches zu Mannichbasen mit niedriger Viskosität führt.

## Beschreibung

### Technisches Gebiet

Die Erfindung betrifft neuartige Mannichbasen sowie neue Verfahren zur Herstellung von Mannichbasen.

### Stand der Technik

Mannichbasen sind schon lange bekannt. Phenol als Ausgangsmaterial hat den grossen Nachteil, dass die daraus hergestellten Mannichbasen noch Anteile von unreagiertem Phenol enthalten. Aufgrund der Toxizität von Phenol sind auf Phenol basierende Mannichbasen für viele Marktbereiche nicht einsetzbar. Deshalb sind grosse Bestrebungen getätigt worden, Phenolfreie Mannichbasen herzustellen. So wurde beispielsweise Mannichbasen auf Basis von Nonylphenol oder p-tert.- Butylphenol oder Cardanol entwickelt und kommerzialisiert.
Mannichbasen werden vor allem als Beschleuniger für Epoxidharze oder als Härter für Epoxidharze und Polyurethane eingesetzt. WO 00/15687 beschreibt beispielsweise einen Mannichbasen-Beschleuniger, welcher durch Transaminierung einer Mannichbase mit einem Amin hergestellt wird.
Ein grosser Nachteil bekannter Mannich-Härter ist die hohe Viskosität, die bei deren Herstellung aufgrund der Bildung von Oligomeren und Nebenprodukten entsteht. Aufgrund dessen werden die Mannichbasen-Härter üblicherweise in Abmischung von üblichen Polyaminen eingesetzt. Die Zumischung zusätzlicher Polyamine wirkt sich jedoch meist negativ auf die Eigenschaften der ausgehärteten Epoxidharz-Zusammensetzung aus.

### Darstellung der Erfindung

Aufgabe der vorliegenden Erfindung ist es, neuartige Mannichbasen herzustellen, welche als Härter in zweikomponentigen Epoxidharz- und Polyurethan-Zusammensetzungen eingesetzt werden können und frei von Phenol sind.
Es wurde gefunden, dass Mannichbasen gemäss Anspruch 1 diese Eigenschaften zeigen und damit die Probleme des Standes der Technik überwunden werden konnten. Weiterhin wurde ein zweistufiges Herstellverfahren zur Herstellung von Mannichbasen gefunden, welches zu niedrigerer Viskosität der Mannichbasen führt.

### Weg zur Ausführung der Erfindung

Die vorliegende Erfindung betrifft neuartige Mannichbasen zu deren Herstellung mindestens eine phenolische Verbindung der Formel (I) sowie Formaldehyd und mindestens ein Polyamin verwendet werden.

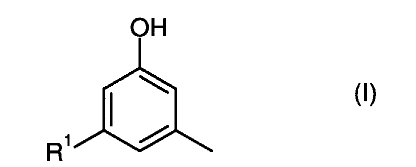

In der obigen Formel (I) stellt der Rest R¹ entweder H oder CH₃ dar. Bevorzugt als phenolische Verbindung der Formel (I) ist m-Kresol.

Formaldehyd kann in dem Fachmann üblicherweise bekannten Formen direkt oder aus formaldhydabspaltenden Verbindungen zur Anwendung kommen. Bevorzugt ist Formaldehyd in Form als para-Formaldehyd oder als Formalin-Lösung. Besonders bevorzugt ist Formalin-Lösung.

Unter ,Polyamin' wird eine Verbindung verstanden, welche zwei oder mehrere primäre Aminogruppen aufweist. Solche Polyamine sind dem Fachmann auf dem Gebiet der Epoxid- und Polyurethan-Chemie als Vernetzungsmittel bekannt. Besonders geeignet sind:
- Aliphatische Polyamine wie
   Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,5-Diamino-2-methylpentan (MPMD), 1,6-Hexandiamin, 2,2,4- und 2,4,4-Trimethylhexamethylendiamin, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,3-Diaminopentan (DAMP), 2,5-Dimethyl-1,6-hexamethylendiamin, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diaza-decamethylen-1,10-diamin sowie Mischungen der vorgenannten Polyamine.
- cycloaliphatische Polyamine wie 1,3- und 1,4-Diaminocyclohexan, 1,2-Diaminocyclohexan(DCH), Bis-(4-aminocyclohexyl)-methan (PACM), Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan, 1,3- und 1,4-Bis-(aminomethyl)cyclohexan, 1,3-2,5(2,6)-Bis-(aminomethyl)-bicyclo[2.2.1 ]heptan (NBDA, hergestellt von Mitsui Chemicals), 3(4),8(9)-Bis-(aminomethyl)-tricyclo[5.2.1.02,6]decan, 3,9-Bis-(3-aminopropyl)-2,4,8,10-tetraoxaspiro[5.5]undecan, 1,3- und 1,4-Xylylendiamin, Octahydro-4,7-methano-indene-2,5-diamin, Octahydro-4,7-methano-indene-1,6-diamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals), sowie Mischungen der vorgenannten Polyamine.
- aromatische Amine wie Toluylendiamin, Phenylendiamin, 4,4 - methylendianilin (MDA) sowie Mischungen der vorgenannten Polyamine.

Bevorzugt sind Polyamine ausgewählt aus der Gruppe umfassend DAMP, IPDA, 1,3- und 1,4-Diaminocyclohexan, 1,2-Diaminocyclohexan 1,3- und 1,4-Butandiamin, 1,3- und 1,5-Pentandiamin, MPMD, 1,3-Xylylendiamin, 1,3-Bis-(aminomethyl)cyclohexan, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diazadecamethylen-1,10-diamin, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan sowie Mischungen davon.

Besonders bevorzugt sind die Polyamine ausgewählt aus der Gruppe umfassend 1,3-Xylylendiamin, 1,3-Bis-(aminomethyl)cyclohexan, Diethylentriamin, Triethylentetramin (3,6-Diaza-octamethylendiamin), Tetraethylenpentamin, IPDA, 1,2-Diaminocyclohexan, 4,7-Diaza-decamethylen-1,10-diamin sowie Mischungen davon.

Selbstverständlich sind auch Mischungen solcher Polyamine mit anderen Polyaminen oder anderen Aminen möglich.
Die Auswahl der eingesetzten Polyamine beeinflusst stark die Eigenschaften der mit dem offenbarten Verfahren hergestellten Mannichbasen sowie der damit ausgehärteten Epoxid- oder Polyurethan-Systeme.

Mannichbasen lassen sich aus phenolischen Verbindungen der Formel (I), Formaldehyd, und Polyaminen herstellen. Die Herstellung von Mannichbasen ist nach üblichen einstufigen Verfahren möglich. Bevorzugt werden jedoch die Mannichbasen nach dem im folgenden beschriebenen zweistufigen Verfahren hergestellt.

Ein weiterer Aspekt der vorliegenden Erfindung stellt ein neues zweistufiges Verfahren für die Herstellung von Mannichbasen dar. Dieses erfindungsgemässe Verfahren zur Herstellung einer Mannichbase zeichnet sich dadurch aus, dass in einer ersten Stufe mindestens eine phenolische Verbindung mit Formaldehyd in Gegenwart eines tertiären Amins zur Reaktion gebracht wird und in einer darauf folgenden Stufe mit mindestens einem Polyamin umgesetzt wird.

Als phenolische Verbindungen sind insbesondere solche geeignet, welche an o- und / oder p-Stellung zur Phenolgruppe unsubstituierte Positionen aufweisen. Bespiele hierfür sind Hydroxynaphtaline, Polyhydroxynaphtalie, Alkylphenole, Dialklyphenole, verbrückte Phenole, wie beispielsweise Tetrahydronaphtole. Auch polyphenolische Verbindungen, sowohl einkernige als auch mehrkernige, sind mitumfasst. Beispiele für solche polyphenolische Verbindungen sind Brenzkatechin, Resorcin, Pyrogallol, Phloroglucin, Bisphenol-A, Bisphenol-F.
Besonders geeignet sind phenolische Verbindungen, welche an o- und p-Stellung zur Phenolgruppe unsubstituierte Positionen aufweisen.
Bevorzugt sind phenolische Verbindung der Formel (I) 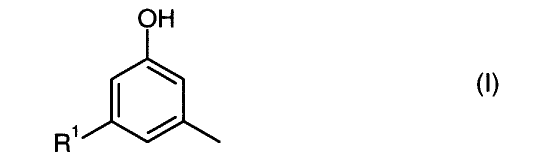 wobei R¹ hierbei H oder CH₃ darstellen.
Als besonders bevorzugt gilt m-Kresol, wo in Formel (I) R¹ ein Wasserstoffatom darstellt.

Formaldehyd kann in dem Fachmann üblicherweise bekannten Formen direkt oder aus formaldhydabspaltenden Verbindungen zur Anwendung kommen. Bevorzugt ist Formaldehyd in Form als para-Formaldehyd oder als Formalin-Lösung. Besonders bevorzugt ist Formalin-Lösung.

Besonders geeignet sind als tertiäre Amine solche, die zusätzlich noch primäre Aminogruppen aufweisen, wie beispielsweise 1-(2-Aminoethyl)-piperazin. Bevorzugt sind tertiäre Amine der Formel (II), in welchen die Reste R² ein C₁-C₆-Alkyl darstellen und n = 1, 2, oder 3 bedeuten:

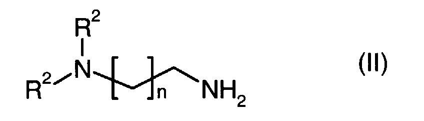

Als R² bevorzugt gilt R² = Methyl oder Ethyl, insbesondere R² = Methyl. Als n bevorzugt ist n = 2.
Es können auch Mischungen von tertiären Amine eingesetzt werden. Unter Umständen können zusätzlich in der ersten Stufe auch noch Alkalihydroxide, Erdalkalihydroxide oder Mischungen davon eingesetzt werden.

Vorteilhaft wird in der ersten Stufe der Formaldehyd zu einer Mischung der phenolischen Komponente und des tertiären Amins zugegeben. Die Zugabe ist vorteilhaft derart gestaltet, dass unter Kühlung der ebenfalls gekühlte Formaldehyd langsam, beispielsweise tropfenweise, unter Rühren zugegeben wird, so dass nur ein geringfügiger Temperaturanstieg festgestellt wird. Es sollte darauf geachtet werden, dass die Temperatur 45° bis 50°C nicht überschreitet. Nach der Beendigung der Zugabe wird vorteilhaft noch während circa 1 Stunde die Temperatur auf etwa 45°C gehalten. Weiterhin ist das Arbeiten unter Inertgas empfohlen.

In einer zweiten Stufe wird eine Umsetzung mit mindestens einem Polyamin durchgeführt. Vorteilhaft wird in der zweiten Stufe langsam, beispielsweise tropfenweise, das aus der ersten Stufe resultierende Produkt zum Polyamin Stufe unter Rühren zugegeben. Hierbei sollte das Polyamin auf eine Temperatur von etwa 80°C erwärmt werden. Anschliessend an die Zugabe wird vorteilhaft unter Stickstoff auf eine Temperatur von etwa 110°C aufgeheizt Gleichzeitig wird das Reaktionswasser abdestilliert. Das noch nicht ausgetriebene Wasser wird vorzugsweise durch Anlegen von Vakuum abdestilliert.
Die Mannichbase kann sofort, vorzugsweise nach Abkühlung auf Raumtemperatur als Härter eingesetzt oder abgemischt werden. Die Mannichbase ist lagerstabil und ändert nicht wesentlich ihre Eigenschaften bei Lagerung.

Die Auswahl der eingesetzten Polyamine beeinflusst stark die Eigenschaften der mit dem offenbarten Verfahren hergestellten Mannichbasen sowie der damit ausgehärteten Epoxid- oder Polyurethan-Systeme. Grundsätzlich sind alle dem Fachmann auf dem Gebiet der Epoxid- und Polyurethan-Chemie als Vernetzungsmittel bekannten Polyamine als Polyamin für den Einsatz im erfindungsgemässen Verfahren geeignet.

Besonders geeignete Polyamine sind:
- Aliphatische Polyamine wie
   Ethylendiamin, 1,2- und 1,3-Propandiamin, 2-Methyl-1 ,2-propandiamin, 2,2-Dimethyl-1,3-propandiamin, 1,3- und 1,4-Butandiamin, 1,3- und 1,5-Pentandiamin, 1,5-Diamino-2-methylpentan (MPMD), 1,6-Hexandiamin, 2,2,4- und 2,4,4-Trimethylhexamethylendiamin, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,3-Diaminopentan (DAMP), 2,5-Dimethyl-1 ,6-hexamethylendiamin, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diaza-decamethylen-1,10-diamin sowie Mischungen der vorgenannten Polyamine.
- cycloaliphatische Polyamine wie 1,3- und 1,4-Diaminocyclohexan, 1,2-Diaminocyclohexan(DCH), Bis-(4-aminocyclohexyl)-methan (PACM), Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan, 1,3- und 1,4-Bis-(aminomethyl)cyclohexan, 1,3-2,5(2,6)-Bis-(aminomethyl)-bicyclo[2.2.1 ]heptan (NBDA, hergestellt von Mitsui Chemicals), 3(4),8(9)-Bis-(aminomethyl)-tricyclo[5.2.1.02,6]decan, 3,9-Bis-(3-aminopropyl)-2,4,8,10-tetraoxaspiro[5.5]undecan, 1,3- und 1,4-Xylylendiamin, Octahydro-4,7-methano-indene-2,5-diamin, Octahydro-4,7-methano-indene-1,6-diamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals), sowie Mischungen der vorgenannten Polyamine.
- aromatische Amine wie Toluylendiamin, Phenylendiamin, 4,4 - methylendianilin (MDA) sowie Mischungen der vorgenannten Polyamine.

Bevorzugt sind Polyamine ausgewählt aus der Gruppe umfassend DAMP, IPDA, 1,3- und 1,4-Diaminocyclohexan, 1,2-Diaminocyclohexan 1,3- und 1,4-Butandiamin, 1,3- und 1,5-Pentandiamin, MPMD, 1,3-Xylylendiamin, 1,3-Bis-(aminomethyl)cyclohexan, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diazadecamethylen-1,10-diamin, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan sowie Mischungen davon.
Besonders bevorzugt sind die Polyamine ausgewählt aus der Gruppe umfassend 1,3-Xylylendiamin, 1,3-Bis-(aminomethyl)cyclohexan, Diethylentriamin, Triethylentetramin (3,6-Diaza-octamethylendiamin), Tetraethylenpentamin, IPDA, 1,2-Diaminocyclohexan, 4,7-Diaza-decamethylen-1,10-diamin sowie Mischungen davon.
Selbstverständlich sind auch Mischungen solcher Polyamine mit anderen Polyaminen oder anderen Aminen möglich.

Mittels des erfindungsgemässen Verfahren hergestellte Mannichbasen weisen sehr niedrige Viskositäten auf. Das Verhältnis k(η₁/η₂) zwischen Viskosität der Mannichbase hergestellt nach einstufigem Verfahren (η₁) zu der Viskosität der Mannichbase hergestellt nach erfindungsgemässen zweistufigem Verfahren (η₂) ist grösser 1, bevorzugt grösser 2.5, insbesondere grösser 3.
Das zur Bestimmung von η₁ relevante einstufige Verfahren zeichnet sich durch die Zugabe von Formaldehyd zu einer Mischung Polyamin und phenolischer Verbindung aus.

Die erzielte Viskosität der Mannichbase hergestellt nach dem erfindungsgemässen Verfahren hängt stark von der eingesetzten phenolischen Verbindung sowie vom eingesetzten Polyamin ab.
Besonders geeignete Mannichbasen weisen eine Viskosität bei 25°C kleiner als 1000 mPas. Bevorzugte Mannichbasen weisen Viskositäten im Bereich zwischen 200 und 700 mPas auf.
Dem Fachmann ist klar, dass bei dieser Art von Umsetzung in geringem Masse auch noch nicht reagierte Bestandteile im Endprodukt vorhanden sein können.
Die nach dem erfindungsgemässen Verfahren hergestellte Mannichbase weisen nebst sekundären auch primäre Aminogruppen auf.
Weiterhin konnte gefunden werden, dass nach diesem Verfahren Mannichbasen hergestellt werden können, die keinen oder zumindest einen geringen Anteil an mehrkernigen Oligomeren aufweisen. Bevorzugt ist der Oligomerenanteil kleiner als 20 Gewichts-%, insbesondere kleiner als 10 Gewichts-% bezogen auf das Gewicht der Mannichbase.
Ebenso können mit diesem Verfahren Mannichbasen hergestellt werden, die einen sehr geringen Anteil an nicht reagierten phenolischen Verbindungen enthalten. Vorteilhaft ist, wenn die Mannichbase weniger als 1 Gewichts-%, insbesondere weniger als 0.5 Gewichts-%, bevorzugt weniger als 0.1 Gewichts-%, an nicht reagierter phenolischer Verbindung bezogen auf das Gewicht der Mannichbase aufweist.
Die erfindungsgemässen Mannichbasen sowie die aus dem erfindungsgemässen Verfahren resultierenden Mannichbasen finden beispielsweise Einsatz als Härter in der Härterkomponente von zweikomponentigen Epoxid- oder Polyurethansystemen. Die Mannichbasen können hier direkt oder als Bestandteile der Härterkomponente eingesetzt werden.
Besonders bevorzugt werden die Mannichbasen eingesetzt als Härter in zweikomponentigen Epoxidharz-Systemen, insbesondere in zweikomponentigen Epoxidharz-Klebstoffen.
Die mit diesen Mannichbasen gehärteten zweikomponentigen Epoxid- oder Polyurethansysteme und die daraus erhaltenen Produkte weisen sehr vorteilhafte Eigenschaften auf.

### Beispiele

Die im Folgenden genannten Beispiele dienen zur Veranschaulichung der Erfindung.

### Beispiel einer zweistufigen Mannichbasenherstellung

### Herstellung 1. Stufe

Die phenolische Verbindung wurde in einem Glaskolben vorgelegt und mit tertiärem Amin versetzt. Das Gemisch wurde auf 20°C gekühlt und dann wurde langsam und unter Kühlung kalte Formalinlösung (36.5 Gew.-% in Wasser) zugetropft. Es trat eine deutliche Wärmetönung auf. Die Innentemperatur wurde zwischen 40°C und 45°C gehalten. Nach der Beendigung der Zugabe wurde noch während 1 Stunden bei 40 - 45°C gerührt.

### Herstellung 2. Stufe

Das in Tabelle 1 angegebene Polyamin wurde im Reaktor bei RT unter Stickstoff vorgelegt, auf 80°C erwärmt und das aus der ersten Stufe resultierende Zwischenprodukt unter Rühren langsam zugegossen. Es trat eine milde Wärmetönung auf. Unter Stickstoff wurde aufgeheizt auf ca. 110°C und gleichzeitig das Reaktionswasser unter Normaldruck abdestilliert. Nach 80% der theoretischen Menge Reaktionswasser wurde Vakuum angelegt und bis zur theoretischen Wassermenge abdestilliert.

### Beispiel einer einstufigen Mannichbasenherstellung

Das in Tabelle 1 angegebene Polyamin, gegebenenfalls vorhandene tertiäre Amin sowie die phenolische Verbindung wurden vorgelegt. Unter Kühlung wurde bei einer Temperatur von 20 bis 30°C eine kalte Formalinlösung (36.5 Gew.-% in Wasser) zugetropft. Es trat eine erhebliche Wärmetönung auf. Unter Stickstoff wurde aufgeheizt auf ca. 110°C und gleichzeitig das Reaktionswasser unter Normaldruck abdestilliert. Nach 80% der theoretischen Menge Reaktionswasser wurde Vakuum angelegt und bis zur theoretischen Wassermenge abdestilliert.

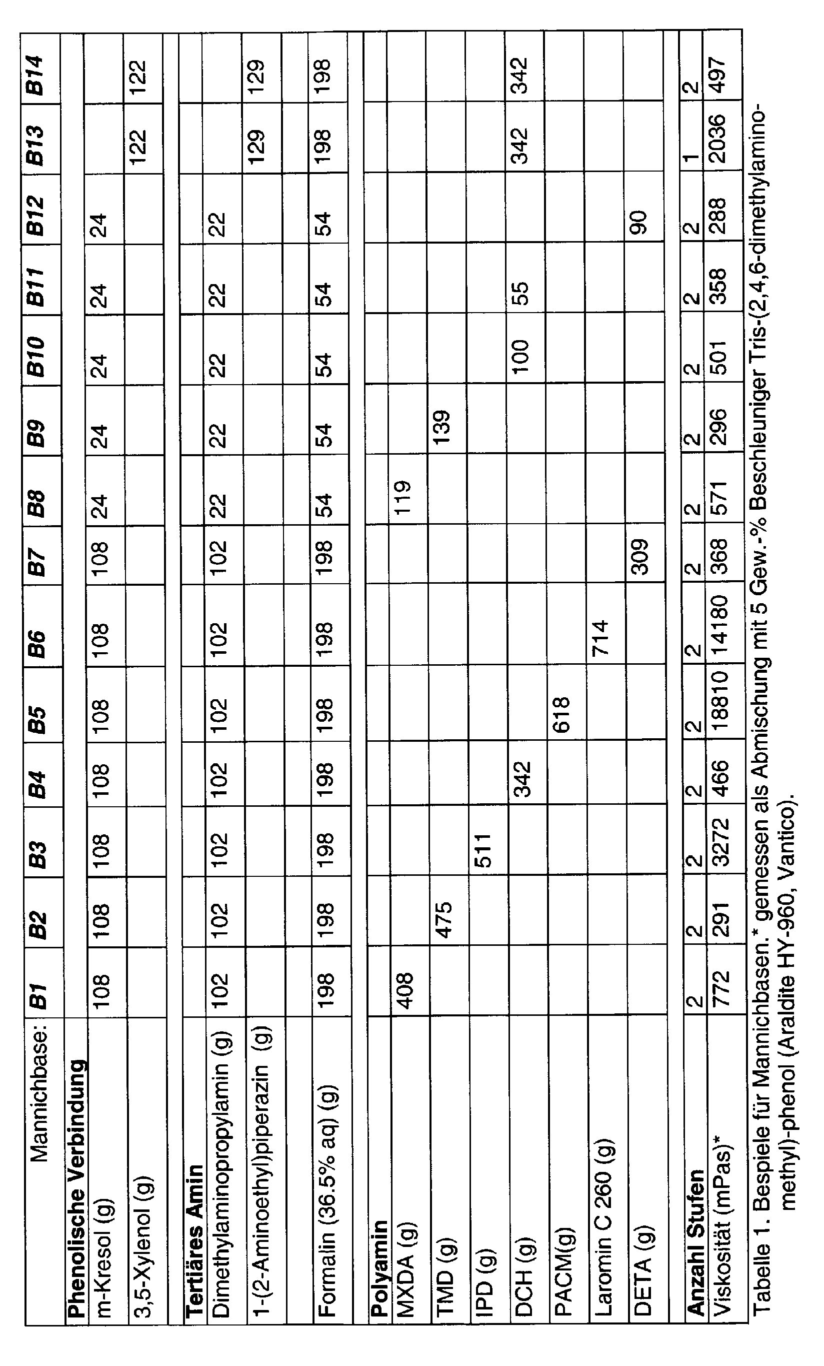

### Beispiel der Verwendung einer Mannichbasen mit Epoxidharzen

Verschiedene Mannichbase wurden, gegebenenfalls in Kombination mit zusätzlichen Polyaminen als Härter mit einer Epoxidharz-Komponente bestehend aus 85% Bisphenol-A-Diglydiylether (kommerziell erhältlich von Vantico als Araldite GY-250) und 15% Trimethylolpropan-Trigylcidylether bei 20 bis 23°C und 50% relativer Luftfeuchtigkeit manuell gemischt und während 7 Tagen bei diesen Bedingungen ausgehärtet.
Die Zugfestigkeit, der E-Modul sowie die Bruchdehnung wurde an Prüfkörpern, welche bei 23°C und 50 % relativer Luftfeuchtigkeit während 7 Tagen ausgehärtet wurden, nach ISO 527 mit einer Zuggeschwindigkeit von 5 mm/min bestimmt
Die Topfzeit wurde von einer 100g- Mischung in einem isolierten zylindrischen Becher bei 23°C mittels Geltimer bestimmt.

**Tabelle 2.**

| Verwendung von Mannichbase in Epoxidharzzusammensetzungen | | | | |
|---|---|---|---|---|
| Härterzusammensetzungen | ***H1*** (g) | ***H2*** (g) | ***H3*** (g) | ***H4*** (g) |
| ***B2*** *(g)* | 95 | | | |
| ***B7*** | | 95 | | |
| ***B10*** | | | | 47.5 |
| ***B12*** | | | 47.5 | |
| DCH | | | 47.5 | |
| DETA | | | | 47.5 |
| Tris-(2,4,6-dimethylaminomethyl)-phenol | 5 | 5 | 5 | 5 |
| Viskosität (mPas) | 291 | 368 | 30 | 30 |
| | | | | |

| Ergebnisse nach Aushärtung mit Harzkomponente | | | | |
|---|---|---|---|---|
| Zugfestigkeit (MPa) | 18 | 31 | 10 | 41 |
| E-Modul (MPa) | 3567 | 3581 | 3830 | 4012 |
| Bruchdehnung (%) | 0.48 | 0.88 | 0.25 | 1.05 |
| Topfzeit bei 25°C (min) | 40 | 20 | 55 | 27 |

Die Resultate aus Tabelle 2 zeigen, dass die Mannichbasen geeignet sind als Härter für Epoxidharze.

## Patentansprüche

1. Mannichbase, **dadurch gekennzeichnet, dass** zu deren Herstellung mindestens eine phenolische Verbindung der Formel (I) 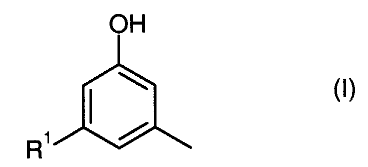 mit R¹ = H oder CH₃,
sowie Formaldehyd und mindestens ein Polyamin verwendet werden.

2. Mannichbase gemäss Anspruch 1, **dadurch gekennzeichnet, dass** zu deren Herstellung in einer ersten Stufe mindestens eine phenolische Verbindung der Formel (I) mit Formaldehyd in Gegenwart eines tertiären Amins zur Reaktion gebracht wird und in einer darauf folgenden Stufe mit mindestens einem Polyamin umgesetzt wird.

3. Mannichbase gemäss Anspruch 2, **dadurch gekennzeichnet, dass** das tertiäre Amin die Formel (11) aufweist 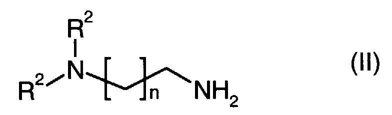 mit R² = C₁-C₆-Alkyl und n = 1, 2, oder 3.

4. Mannichbase gemäss einem der Ansprüche 2 bis 3, **dadurch gekennzeichnet, dass** in der ersten Stufe der Formaldehyd zu einer Mischung der phenolischen Verbindung der Formel (I) und des tertiären Amins zugegeben wird.

5. Mannichbase gemäss einem der vorhergehenden Ansprüche, **dadurch gekennzeichnet, dass** in Formel (I) R¹ = H ist.

6. Mannichbase gemäss einem der Ansprüche 3 bis 5, **dadurch gekennzeichnet, dass** in Formel (II) R² = CH₃ ist.

7. Mannichbase gemäss einem der Ansprüche 3 bis 6, **dadurch gekennzeichnet, dass** in Formel (II) n = 2 ist.

8. Mannichbase gemäss einem der vorhergehenden Ansprüche, **dadurch gekennzeichnet, dass** die Viskosität bei 25°C kleiner als 1000 mPas ist, insbesondere im Bereich zwischen 200 und 700 mPas liegt.

9. Verfahren zur Herstellung einer Mannichbase, **dadurch gekennzeichnet, dass** in einer ersten Stufe mindestens eine phenolische Verbindung mit Formaldehyd in Gegenwart eines tertiären Amins zur Reaktion gebracht wird und in einer darauf folgenden Stufe mit mindestens einem Polyamin umgesetzt wird.

10. Verfahren zur Herstellung einer Mannichbase gemäss Anspruch 9, **dadurch gekennzeichnet, dass** in der ersten Stufe der Formaldehyd zu einer Mischung der phenolischen Verbindung und des tertiären Amins zugegeben wird.

11. Verfahren zur Herstellung einer Mannichbase gemäss einem der Ansprüche 9 bis 10, **dadurch gekennzeichnet, dass** das tertiäre Amin die Formel (II) aufweist 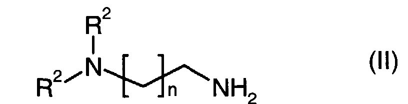 mit R² = C₁-C₆-Alkyl und n = 1, 2, oder 3.

12. Verfahren zur Herstellung einer Mannichbase gemäss Anspruch 11, **dadurch gekennzeichnet, dass** in Formel (II) R² = CH₃ ist.

13. Verfahren zur Herstellung einer Mannichbase gemäss Anspruch 11 oder Anspruch 12, **dadurch gekennzeichnet, dass** in Formel (II) n = 2 ist.

14. Verfahren zur Herstellung einer Mannichbase gemäss einem der Ansprüche 9 bis 13, **dadurch gekennzeichnet, dass** die phenolische Verbindung eine phenolische Verbindung der Formel (I) 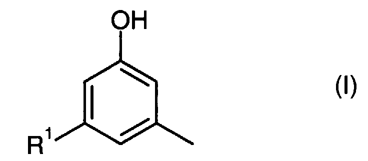 mit R¹ = H oder CH₃, ist.

15. Verfahren zur Herstellung einer Mannichbase gemäss Anspruch 14, **dadurch gekennzeichnet, dass** in Formel (I) R¹ = H ist.

16. Härterkomponente für zweikomponentige Epoxid- oder Polyurethansysteme, **dadurch gekennzeichnet, dass** diese Härterkomponente eine Mannichbase gemäss einem der Ansprüche 1 bis 8 enthält.

17. Verwendung einer Mannichbase gemäss einem der Ansprüche 1 bis 8 als Härter für Epoxid- oder Polyurethansysteme.

18. Epoxid- oder Polyurethansysteme, welche mindestens eine Mannichbase gemäss einem der Ansprüche 1 bis 8 enthalten.

19. Epoxid- oder Polyurethansysteme, welche mindestens eine Mannichbase enthalten, welche nach einem Verfahren gemäss einem der Ansprüche 9 bis 15 erhalten werden.

20. Ausgehärtete Produkte, welche aus einem Epoxid- oder Polyurethansystem gemäss Anspruch 19 oder 20 erhalten wurden.
